# EUROPÄISCHE PATENTSCHRIFT

(11) **EP 2 711 469 B1**
(45) Veröffentlichungstag und Bekanntmachung des Hinweises auf die Patenterteilung: **09.12.2015**
(21) Anmeldenummer: 12185878.1
(22) Anmeldetag: 25.09.2012
(51) Int. Cl.: E02F 9/20, E02F 9/22

(54) **Baumaschine mit Hybridantrieb**
Construction machine with hybrid drive
Engin avec entraînement hybride

(43) Veröffentlichungstag der Anmeldung: 26.03.2014
(73) Patentinhaber: Wacker Neuson AG, 8604 Volketswil (CH)
(72) Erfinder: Stillhart, Patrick, 9245 Oberbueren (CH)
(74) Vertreter: Rentsch Partner AG

(56) Entgegenhaltungen:
- EP-A1- 2 479 351
- DE-U1-202009 006 525
- JP-A- 2002 242 234

## Beschreibung

### TECHNISCHES GEBIET

Die Erfindung bezieht sich auf eine Baumaschine mit einem Hybridantrieb, welcher einen Verbrennungsmotor und einen Elektromotor umfasst.

### STAND DER TECHNIK

Im Stand der Technik sind Baumaschinen wie insbesondere Bagger, Radlader, Teleskoplader, Kompaktlader, Dumper, etc. eingerichtet, unterschiedlichste Aufgaben im Hochbau, Tiefbau, Strassenbau, Gartenbau, Landschaftsbau sowie in Kommunen, Recyclingbetrieben, Industriebetrieben, der Landwirtschaft etc. zu erfüllen. In einer Ausführungsvariante umfasst eine Baumaschine einen hydraulischen Antrieb, welcher eingerichtet ist hydraulische Arbeitsmaschinen wie insbesondere einen Ausleger/ Löffel, einen Hammer, Räder, Raupen, ein Drehwerk, etc. der Baumaschine anzutreiben. Der hydraulische Antrieb umfasst im bekannten Stand der Technik einen Verbrennungsmotor wie beispielsweise einen Dieselmotor, welcher eine Hydraulikpumpe antreibt, um eine Hydraulikflüssigkeit bei erforderlichem Druck und erforderlicher Förderleistung einer Arbeitshydraulik, einer Fahrhydraulik, einer Drehhydraulik zur Verfügung zu stellen. Über eine Hydrauliksteuerung, welche insbesondere Hydraulikventile umfasst, werden die entsprechenden Funktionen der Baumaschine gesteuert, also z.B. das Vor- oder Rückfahren, das Bewegen eines Greifers, das Drehen eines Drehwerks, etc.

Für den Betrieb der Baumaschine in geschlossenen Räumen, in Umgebungen mit besonderen Lärm- oder Abgasvorschriften, etc. ist es bekannt, die Hydraulikpumpe der Baumaschine statt mit einem Verbrennungsmotor mit einem Elektroantrieb anzutreiben. Um die Baumaschine rasch an unterschiedliche Betriebsbedingungen anpassen zu können, sind im Stand der Technik Baumaschinen bekannt, welche sowohl einen Verbrennungsmotor als auch einen Elektromotor aufweisen. Dabei ist zwischen dem Verbrennungsmotor, dem Elektromotor und der Hydraulikpumpe eine umschaltbare Kupplung vorgesehen, mit welcher zwischen einer Kraftübertragung vom Verbrennungsmotor auf die Hydraulikpumpe oder einer Kraftübertragung vom Elektromotor auf die Hydraulikpumpe umgeschaltet werden kann. Eine solche umschaltbare Kupplung weist beispielsweise einen Riemen, Zahnräder, etc. sowie einen Umschalthebel auf.

Die DE 20 2009 006 525 zeigt einen fahrbaren Bagger mit einem Verbrennungsmotor der mindestens eine Hydraulikpumpe antreibt und mit wenigstens einem durch die Hydraulikpumpe über ein Hydraulikleitungssystem betätigten hydraulischen Motor oder Arbeitszylinder. Ein Elektromotor ist zusammen mit einer von ihm angetriebenen Hydraulikpumpe an einem Traggestell oder Träger befestigt. Das Traggestell oder der Träger ist am Bagger in Gebrauchsstellung angebracht. Die vom Elektromotor angetriebene Hydraulikpumpe ist in Gebrauchsstellung mit dem Hydraulikleitungssystem des Baggers verbunden. Hinter den Hydraulikpumpen sind in Strömungsrichtung jeweils Rückschlagventile vorgesehen, womit die Antriebsmotoren unabhängig voneinander betrieben werden können.

Die EP 2 479 351 zeigt eine Hybrid-Baumaschine. Eine erste Pumpe wird von einem elektrisch angetriebenen Motor-Generator angetrieben. Eine zweite Pumpe ist mit einem Motor gekoppelt. Mehrere Stellglieder sind vorgesehen. Die erste Pumpe steuert wenigstens eines der Stellglieder unabhängig von der zweiten Pumpe und die zweite Pumpe steuert zumindest ein anderes der Stellglieder unabhängig von der ersten Pumpe.

Die JP 2002/242234 zeigt einen Hybrid-Bagger mit einer Schaufel, wobei eine erhöhte Rückgewinnungseffizienz angestrebt ist. Ein Verbrennungsmotor ist mit einer Hydraulikpumpe und einem Generator verbunden. Die Hydraulikpumpe ist über eine Steuereinrichtung mit Stellgliedern verbunden. Der Generator ist mit Elektroeinrichtungen und Elektromotoren verbunden.

### DARSTELLUNG DER ERFINDUNG

Es ist eine Aufgabe der vorliegenden Erfindung eine Baumaschine mit einem Hybridantrieb, welcher einen Verbrennungsmotor und einen Elektromotor umfasst, vorzuschlagen, welche zumindest gewisse Nachteile des Standes der Technik vermeidet oder reduziert. Es ist insbesondere eine Aufgabe der vorliegenden Erfindung eine Baumaschine mit einem Hybridantrieb, welcher einen Verbrennungsmotor und einen Elektromotor umfasst, vorzuschlagen, welcher eine einfache Umschaltung zwischen dem Betrieb mit dem Verbrennungsmotor und dem Betrieb mit dem Elektromotor ermöglicht. Es ist insbesondere eine Aufgabe der vorliegenden Erfindung eine Baumaschine mit einem Hybridantrieb, welcher einen Verbrennungsmotor und einen Elektromotor umfasst, vorzuschlagen, welcher bei bestehenden Baumaschinen einfach nachgerüstet werden kann.

Gemäss der vorliegenden Erfindung werden diese Ziele durch die Elemente der unabhängigen Ansprüche erreicht. Weitere vorteilhafte Ausführungsformen gehen ausserdem aus den abhängigen Ansprüchen und der Beschreibung hervor.

Eine Baumaschine mit einem Hybridantrieb, welcher einen Verbrennungsmotor und einen Elektromotor umfasst, ist dadurch gekennzeichnet, dass eine erste Hydraulikpumpe vorgesehen ist, welche vom Verbrennungsmotor antreibbar ist, eine zweite Hydraulikpumpe vorgesehen ist, welche vom Elektromotor antreibbar ist, und ein Hydraulikleitungssystem angeordnet ist, an welchem die erste Hydraulikpumpe und eine oder mehrere hydraulische Arbeitsmaschinen der Baumaschine angeschlossen sind. Durch das Antreiben der ersten Hydraulikpumpe mit dem Verbrennungsmotor oder durch das Antreiben der zweiten Hydraulikpumpe mit dem Elektromotor wird im Hydraulikleitungssystem die Hydraulikflüssigkeit zum hydraulischen Verbraucher gefördert und dieser angetrieben. Zum Umschalten zwischen dem Betrieb mit dem Verbrennungsmotor und dem Betrieb mit dem Elektromotor ist kein Umschalten wie z.B. einer mechanischen Kupplung erforderlich.

Es ist ferner möglich, beispielweise falls eine hohe Spitzenleistung erforderlich ist, gleichzeitig den Verbrennungsmotor und den Elektromotor zu betreiben, wobei wahlweise der Verbrennungsmotor und/oder der Elektromotor mit reduzierter Leistung oder mit deren Nennleistung betrieben werden können.

In einer Ausführungsvariante weist das Hydraulikleitungssystem eines oder mehrere hydraulische Rückschlagventile auf, welche eingerichtet sind, beim Antreiben der ersten Hydraulikpumpe durch den Verbrennungsmotor eine hydraulische Verbindung zwischen dem Hydraulikleitungssystem und der zweiten Hydraulikpumpe zu unterbrechen und/oder beim Antreiben der zweiten Hydraulikpumpe durch den Elektromotor eine hydraulische Verbindung zwischen dem Hydraulikleitungssystem und der ersten Hydraulikpumpe zu unterbrechen. Falls nur der Verbrennungsmotor betrieben wird, wirken der zweite Hydraulikantrieb und der Elektromotor nicht als hydraulische Verbraucher. Falls nur der Elektromotor betrieben wird, wirken der erste Hybridantrieb und der Verbrennungsmotor nicht als hydraulische Verbraucher.

In einer Ausführungsvariante umfasst die Baumaschine einen Schalter, welcher eingerichtet ist, zwischen Verbrennungsbetriebsfunktionen beim Betrieb des Verbrennungsmotors und Elektrobetriebsfunktionen beim Betrieb des Elektromotors umzuschalten. Der Schalter ist beispielsweise als elektrischer Schalter ausgeführt und konfiguriert insbesondere Funktionen eines Zündschlosses der Baumaschine, so dass mit dem Drehen des Zündschlüssels entweder der Verbrennungsmotor und die dazugehörigen Verbrennungsbetriebsfunktionen oder der Elektromotor und die dazugehörigen Elektromotorfunktionen gestartet werden.

In einer Ausführungsvariante umfassen sowohl die Verbrennungsbetriebsfunktionen als auch die Elektrobetriebsfunktionen eine oder mehrere der folgenden Funktionen: Betrieb einer Bordelektrik der Baumaschine, Betrieb eines Stundenzählers der Baumaschine, und Betrieb einer Beleuchtung der Baumaschine. Die Bordelektrik umfasst beispielsweise die elektrischen Einrichtungen, um Armaturen der Führerkabine der Baumaschine zu betreiben. Der Stundenzähler ist beispielsweise eingerichtet, um Betriebsstunden der Baumaschine zu erfassen, beispielsweise aufgeschlüsselt nach Betriebsstunden mit dem Verbrennungsmotor und Betriebsstunden mit dem Elektromotor. Die Beleuchtung der Baumaschine kann eine Innenbeleuchtung betreffen und/oder Scheinwerfer, um ein Arbeitsgebiet, welches mit der Baumaschine bearbeitet werden soll, zu beleuchten.

In einer Ausführungsvariante weist die Verbrennungsbetriebsfunktionen eine oder mehrere der folgenden Funktionen auf: Einschalten von Standardfunktionen für den Verbrennungsmotor, Einschalten eines Abstellmagnets des Verbrennungsmotors, Einschalten einer Kraftstoffpumpe für den Verbrennungsmotor, Abschalten von Standardfunktionen für den Elektromotor und Abschalten eines zusätzlichen Lüfters für das Hydrauliköl. Die Standardfunktionen für den Verbrennungsmotor können beispielsweise eine Zündung, eine Heizung, eine Kühlung, etc. betreffen, wie sie z.B. bei Diesel- oder Benzinmotoren üblich sind. Das Einschalten eines Abstellmagnets kann insbesondere bei einem Dieselmotor erforderlich sein. Das Einschalten einer Kraftstoffpumpe kann insbesondere für Diesel- oder Benzinmotoren erforderlich sein. Das Abschalten von Standardfunktionen für den Elektromotor kann die Stromversorgung eines Erregerfelds betreffen. Das Abschalten eines zusätzlichen Lüfters für das Hydrauliköl kann beispielsweise deshalb erfolgen, weil der Verbrennungsmotor eine solche Lüftung zur Verfügung stellt und der Elektromotor dazu eine separate Lüftung erfordert.

In einer Ausführungsvariante umfassen die Elektrobetriebsfunktionen eine oder mehrere der folgenden Funktionen: Einschalten von Standardfunktionen für den Elektromotor, Einschalten eines zusätzlichen Lüfters für das Hydrauliköl, Abschalten von Standardfunktionen für den Verbrennungsmotor, Abschalten eines Abstellmagnets des Verbrennungsmotors, und Abschalten einer Kraftstoffpumpe für den Verbrennungsmotor. Durch das Umschalten zwischen Elektrobetriebsfunktionen und Verbrennungsbetriebsfunktionen werden die für den jeweiligen Motor erforderlichen Funktionen optimal eingestellt.

In einer Ausführungsvariante umfassen einer oder mehrere der hydraulischen Antriebe eine oder mehrere der folgenden Funktionen: Bewegen eines Auslegers/Löffels der Baumaschine, Betreiben eines Hammers der Baumaschine, Antreiben eines Fahrwerks der Baumaschine, Einstellen einer Teleskopfunktion eines Fahrwerks der Baumaschine, Betätigen eines Planierschilds der Baumaschine, Drehen eines Drehwerks für einen drehbaren Oberwagen der Baumaschine und Einstellen einer Neigung eines neigbaren Oberwagens der Baumaschine. Die erfindungsgemässe Baumaschine weist somit die für den Anwendungszweck üblichen Funktionen auf.

In einer Ausführungsvariante sind der Elektromotor und/oder die zweiten Hydraulikpumpe an einem drehbaren Oberwagen der Baumaschine angeordnet. Beispielsweise umfasst eine bestehende Baumaschine einen Verbrennungsmotor, welcher in einem Gehäuse des Oberwagens der Baumaschine angeordnet ist. Auf dieses Gehäuse wird ein weiteres Gehäuse aufgesetzt, welches den Elektromotor enthält, sowie den Anschluss an eine Stromversorgung. Die erste Hydraulikpumpe, die zweite Hydraulikpumpe und das Hydraulikleitungssystem können im Gehäuse mit dem Verbrennungsmotor und/oder im Gehäuse für den Elektromotor angeordnet sein. Der Oberwagen der Baumaschine ist beispielsweise drehbar angeordnet und ein elektrisches Speisekabel kann beispielsweise über Masten zur Baumaschine geführt werden.

In einer Ausführungsvariante sind der Elektromotor und/oder die zweite Hydraulikpumpe an einem Fahrwerk der Baumaschine angeordnet. Insbesondere bei der Anordnung des Elektromotors am Fahrwerk kann ein elektrisches Speisekabel auf dem Boden zur Baumaschine geführt werden, wobei ein drehbarer Oberwagen beliebig verdreht werden kann, ohne dass es zu Problemen mit dem Verwickeln des elektrischen Speisekabels kommen kann.

Neben einer Baumaschine mit einem Hybridantrieb bezieht sich die Erfindung auf ein Umbau-Kit zum Umbau einer Baumaschine mit einem Verbrennungsmotor und einer ersten Hydraulikpumpe oder einem Elektromotor und einer zweiten Hydraulikpumpe in eine Baumaschine mit einem Hybridantrieb, umfassend: einen Elektromotor und eine zweite Hydraulikpumpe oder einen Verbrennungsmotor und eine erste Hydraulikpumpe, welche in der Baumaschine derart eingebaut werden können, dass die zweite Hydraulikpumpe vom Elektromotor antreibbar ist oder dass die erste Hydraulikpumpe vom Verbrennungsmotor antreibbar ist, und Bauteile für ein Hydraulikleitungssystem welche derart in die Baumaschine eingebaut werden können, dass ein Hydraulikleitungssystem gebildet wird, an welchem die erste Hydraulikpumpe, die zweite Hydraulikpumpe und eine oder mehrere hydraulische Arbeitsmaschinen der Baumaschine angeschlossen sind.

In einer Ausführungsvariante umfasst das Umbau-Kit weiter eines oder mehrere hydraulische Rückschlagventile, welche derart in die Baumaschine eingebaut werden können, dass beim Antreiben der ersten Hydraulikpumpe durch den Verbrennungsmotor eine hydraulische Verbindung zwischen dem Hydraulikleitungssystem und der zweiten Hydraulikpumpe unterbrochen wird und/oder beim Antreiben der zweiten Hydraulikpumpe durch den Elektromotor eine hydraulische Verbindung zwischen dem Hydraulikleitungssystem und der ersten Hydraulikpumpe unterbrochen wird.

In einer Ausführungsvariante umfasst das Umbau-Kit weiter einen Schalter sowie Einrichtungen, um Verbrennungsbetriebsfunktionen beim Betrieb des Verbrennungsmotors und Elektrobetriebsfunktionen beim Betrieb des Elektromotors zur Verfügung zu stellen, welcher Schalter sowie welche Einrichtungen derart in die Baumaschine eingebaut werden können, dass mit dem Schalter zwischen Verbrennungsbetriebsfunktionen beim Betrieb des Verbrennungsmotors und Elektrobetriebsfunktionen beim Betrieb des Elektromotors umgeschaltet werden kann.

In einer Ausführungsvariante ist das Umbau-Kit dadurch gekennzeichnet, dass die Einrichtungen, um Verbrennungsbetriebsfunktionen beim Betrieb des Verbrennungsmotors zur Verfügung zu stellen, eine oder mehrere der folgenden Funktionen zur Verfügung stellen: Betrieb einer Bordelektrik der Baumaschine, Betrieb eines Stundenzählers der Baumaschine, Betrieb einer Beleuchtung der Baumaschine, Einschalten von Standardfunktionen für den Verbrennungsmotor, Einschalten eines Abstellmagnets des Verbrennungsmotors, Einschalten einer Kraftstoffpumpe für den Verbrennungsmotor, Abschalten von Standardfunktionen für den Elektromotor und Abschalten eines zusätzlichen Lüfters für das Hydrauliköl.

In einer Ausführungsvariante ist das Umbau-Kit dadurch gekennzeichnet, dass die Einrichtungen, um Elektrobetriebsfunktionen beim Betrieb des Elektromotors zur Verfügung zu stellen, eine oder mehrere der folgenden Funktionen zur Verfügung stellen: Betrieb einer Bordelektrik der Baumaschine, Betrieb eines Stundenzählers der Baumaschine, Betrieb einer Beleuchtung der Baumaschine, Einschalten von Standardfunktionen für den Elektromotor, Einschalten eines zusätzlichen Lüfters für das Hydrauliköl, Abschalten von Standardfunktionen für den Verbrennungsmotor, Abschalten eines Abstellmagnets des Verbrennungsmotors, und Abschalten einer Kraftstoffpumpe für den Verbrennungsmotor.

### KURZE BESCHREIBUNG DER ZEICHNUNGEN

Anhand von Figuren, welche lediglich Ausführungsbeispiele darstellen, wird die Erfindung im Folgenden erläutert. Es zeigen:
- Fig. 1: schematisch einen Bagger, welcher eine Ausführungsform einer Baumaschine ist;
- Fig. 2: schematisch einen aus dem Stand der Technik bekannten Hybridantrieb;
- Fig. 3: schematisch einen erfindungsgemässen Hybridantrieb;
- Fig. 4: schematisch einen erfindungsgemässen Hybridantrieb, mit zwei Rückschlagventilen;
- Fig. 5: schematisch einen erfindungsgemässen Hybridantrieb, mit einem einzelnen Rückschlagventil; und
- Fig. 6: schematisch einen erfindungsgemässen Hybridantrieb mit einem Schalter zum Umschalten zwischen Verbrennungsbetriebsfunktionen und Elektrobetriebsfunktionen.

### WEGE ZUR AUSFÜHRUNG DER ERFINDUNG

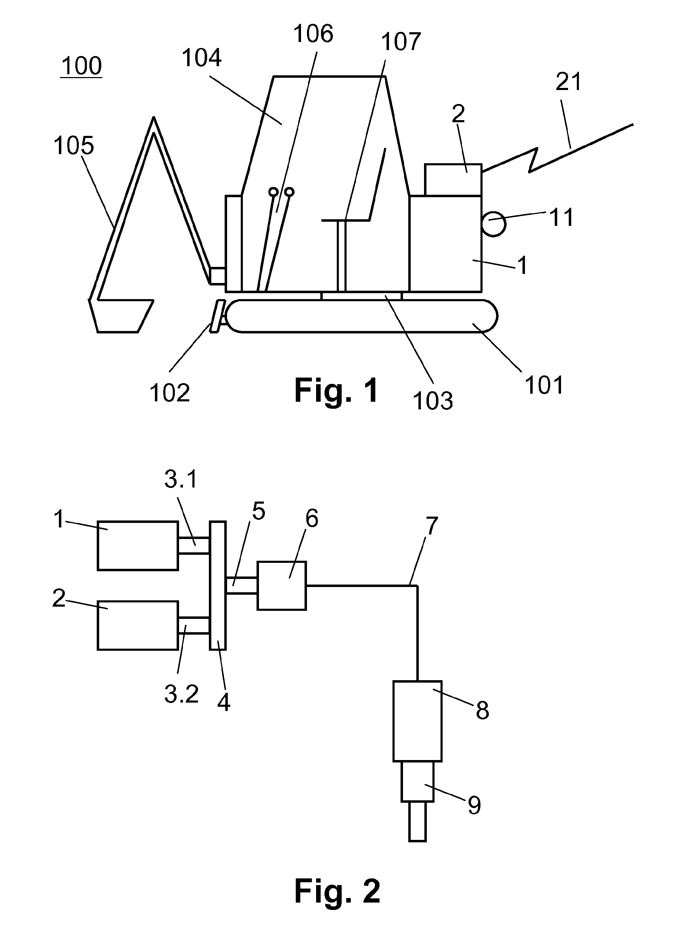

Figur 1 zeigt schematisch als eine Ausführungsform einer Baumaschine einen Bagger 100. Der Bagger 100 umfasst ein Fahrwerk 101, ein Planierschild 102, ein Drehwerk 103, einen Oberwagen 104 und einen Greifer 105. Das Fahrwerk 101 umfasst beispielsweise Raupen oder Pneus und ermöglicht das Fahren des Baggers 100. Das Planierschild 102 ermöglicht es, Planierarbeiten durchzuführen. Das Drehwerk 103 ist eingerichtet, damit der Oberwagen 104 des Baggers 100 gegenüber dem Fahrwerk 101 verdreht werden kann. Dadurch kann insbesondere der Greifer 105 in gewünschte Richtungen ausgerichtet werden. Der Greifer 105 umfasst eine Schaufel, welche angehoben, abgesenkt, geschüttelt, etc. werden kann, um beispielsweise Erdarbeiten durchzuführen. Anstelle der Schaufel ist in einer Ausführungsvariante am Greifer 105 ein Hammer angebracht, um beispielsweise Teile eines Mauerwerks zu bearbeiten, auszubrechen, etc.

Wie in Figur 1 schematisch dargestellt, umfasst der Oberwagen 104 des Baggers 100 eine Führerkabine, welche insbesondere einen Sitz 107 für den Baggerführer sowie Steuerungsarmaturen wie z.B. Steuerknüppel 106 umfasst, um die verschiedenen Funktionen des Baggers zu steuern, also z.B. das Fahren, das Betätigen des Greifers, etc.

Wie in Figur 1 schematisch dargestellt, umfasst der Oberwagen 104 des Baggers 100 einen Verbrennungsmotor 1 und einen Treibstofftank 11. Der Verbrennungsmotor 1 ist beispielsweise als Dieselmotor ausgeführt. In einer Ausführungsvariante wird durch den Verbrennungsmotor 1 eine oder mehrere Hydraulikpumpen angetrieben, um ein Hydrauliksystem zu betreiben, mit welchem die verschiedenen Funktionen des Baggers 100 betrieben werden, also z.B. das Fahren des Baggers 100, das Bewegen des Greifers 105, das Verdrehen des Oberwagens 104 gegenüber dem Fahrwerk 101, etc.

Wie in Figur 1 schematisch dargestellt, umfasst der Bagger 100 in einer Ausführungsvariante einen Elektromotor 2, welcher über ein elektrisches Speisekabel 21 an ein Stromnetz angeschlossen ist. Mit dem Elektromotor 2 wird ebenfalls das Hydrauliksystem des Baggers 100 betrieben, um dessen Arbeitsfunktionen zu betreiben. Der Verbrennungsmotor 1 und der Elektromotor 2 bilden einen Hybridantrieb, wobei wahlweise der Verbrennungsmotor 1 oder der Elektromotor 2 für den Betrieb des Hydrauliksystems des Baggers 100 eingesetzt werden kann.

Figur 2 zeigt schematisch einen aus dem Stand der Technik bekannten Hybridantrieb für eine Baumaschine. Ein Verbrennungsmotor 1 ist über eine Verbrennungsmotorwelle 3.1 und ein Elektromotor 2 ist über eine Elektromotorwelle 3.2 mit einer umschaltbaren Kupplung 4 verbunden, welche über eine Kupplungswelle 5 mit einer Hydraulikpumpe 6 verbunden ist. Die umschaltbaren Kupplung 4 ist eingerichtet, zwischen einer Kraftübertragung von der Verbrennungsmotorwelle 3.1 auf die Kupplungswelle 5 und einer Kraftübertragung von der Elektromotorwelle 3.2 auf die Kupplungswelle 5 umzuschalten. Somit wird die Hydraulikpumpe 6 entweder vom Verbrennungsmotor 1 oder vom Elektromotor 2 angetrieben. Die Hydraulikpumpe 6 ist an Hydrauliksystem 7 angeschlossen, welches an eine hydraulische Arbeitsmaschine 8 angeschlossen ist. Die hydraulische Arbeitsmaschine 8 weist mechanische Einrichtungen 9 wie einen Hydraulikzylinder, einen Hydraulikmotor etc. auf, um einen Greifer, einen Hammer, Räder, Raupen, ein Drehwerk, etc. einer Baumaschine zu betätigen.

In einer Ausführungsvariante weist das Hydraulikleitungssystem 7 mehrere hydraulische Leitungen, Ventile, Regler, Steuerungen, etc. auf, um mit mehreren daran angeschlossenen hydraulischen Arbeitsmaschinen die Arbeitsfunktionen einer Baumaschine zur Verfügung zu stellen, also einen Greifer zu schwenken, einen Hammer zu betätigen, Räder oder Raupen anzutreiben, ein Drehwerk zu drehen, etc.

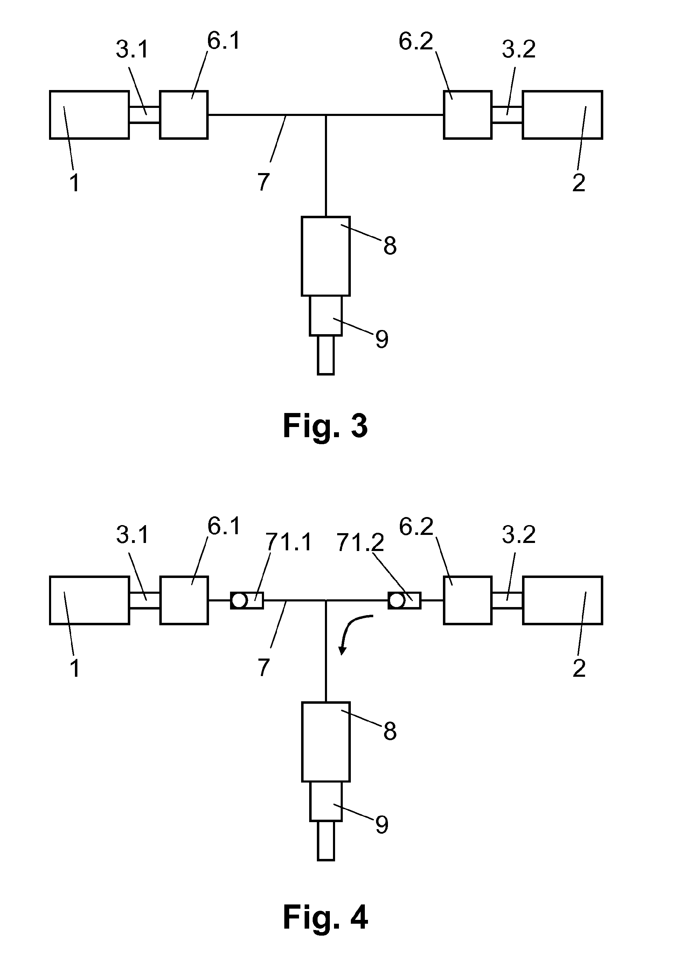

Figur 3 zeigt schematisch einen erfindungsgemässen Hybridantrieb. Ein Verbrennungsmotor 1 ist über eine Verbrennungsmotorwelle 3.1 mit einer ersten Hydraulikpumpe 6.1 verbunden. Ein Elektromotor 2 ist über eine Elektromotorwelle 3.2 mit einer zweiten Hydraulikpumpe 6.2 verbunden. Beim Betrieb des Verbrennungsmotors 1 wird somit die erste Hydraulikpumpe 6.1 angetrieben, und beim Betrieb des Elektromotors 2 wird die zweite Hydraulikpumpe 6.2 angetrieben. Wie in Figur 2 schematisch dargestellt, sind die erste Hydraulikpumpe 6.1 und die zweite Hydraulikpumpe 6.2 an ein Hydraulikleitungssystem 7 angeschlossen, an welchem eine hydraulische Arbeitsmaschine 8 angeschlossen ist. Beim Betrieb des Verbrennungsmotors 1 wird somit die hydraulische Arbeitsmaschine 8 über das Hydraulikleitungssystem 7 mit hydraulischer Antriebskraft versorgt. Ebenso wird beim Betrieb des Elektromotors 2 die hydraulische Arbeitsmaschine 8 mit hydraulischer Arbeitskraft versorgt.

Im Gegensatz zu dem aus dem Stand der Technik bekanntem Hybridantrieb gemäss Figur 2, lässt sich beim erfindungsgemässen Hybridantrieb gemäss Figur 3 ohne Umschaltung einer Kupplung oder eines Getriebes vom Betrieb mit dem Verbrennungsmotor 1 auf den Betrieb mit dem Elektromotor 2 wechseln. Es ist ohne weiteres denkbar, beim erfindungsgemässen Hybridantrieb gemäss Figur 3 sowohl den Verbrennungsmotor 1 als auch den Elektromotor 2 gleichzeitig zu betreiben, um beispielsweise eine erhöhte Leistung zu erhalten. Es ist ferner denkbar, beim Betrieb des Verbrennungsmotors 1 den Elektromotor 2 als Generator zu betreiben und so in der Umgebung der Baumaschine eine lokale Stromversorgung zur Verfügung zu stellen.

Der erfindungsgemässe Hybridantrieb gemäss Figur 3 lässt sich modular aufbauen. Eine Baumaschine kann somit zunächst mit einem Verbrennungsmotor 1 oder einem Elektromotor 2 ausgerüstet werden, und zu einem späteren Zeitpunkt kann bei Bedarf die Baumaschine mit einem entsprechenden Modul nachgerüstet werden, um den Hybridantrieb zu vervollständigen. Eine mit einem Verbrennungsmotor 1 ausgerüstete Baumaschine kann so einfach mit einem Elektromotor 2 nachgerüstet werden und eine mit einem Elektromotor 2 ausgerüstete Baumaschine kann einfach mit einem Verbrennungsmotor 1 nachgerüstet werden.

Der erfindungsgemässe Hybridantrieb gemäss Figur 3 kann beispielsweise an einem Bagger 100 bedarfsgerecht angebracht werden. In einer Ausführungsvariante ist der Verbrennungsmotor 1 am Oberwagen 104 des Baggers 100 angebracht, während der Elektromotor 2 oberhalb des Verbrennungsmotors 1 ebenfalls am Oberwagen 104 des Baggers 100 angebracht ist. In einer Ausführungsvariante ist der Elektromotor 2 stattdessen am Fahrwerk 101 des Baggers 100 angebracht, wobei insbesondere der Oberwagen 104 des Baggers 100 frei gedreht werden kann und das elektrisches Speisekabel 21 sich nicht verwickeln kann.

In einer Ausführungsvariante umfasst die Baumaschine einen elektrischen Energiespeicher, beispielsweise einen Lithium-lonen-Akkumulator, um den Elektromotor 2 zu betreiben. Die Baumaschine kann so vollkommen autonom verwendet werden. In einer Ausführungsvariante umfasst die Baumaschine ein Ladegerät, um den elektrischen Energiespeicher aufzuladen, beispielsweise beim Betrieb des Verbrennungsmotors 1 oder beim Anschluss der Baumaschine an eine externe Stromversorgung.

In einer Ausführungsvariante ist der Elektromotor 3 für den Anschluss an eine dreiphasige 380V Stromversorgung eingerichtet. Die Baumaschine lässt sich dadurch insbesondere in Gebäuden problemlos betreiben, in welchen eine weit verbreitete 380V Stromversorgung schon vorhanden ist.

Figur 4 zeigt schematisch einen erfindungsgemässen Hybridantrieb, wobei im Hydraulikleitungssystem 7 ein erstes Rückschlagventil 71.1 und ein zweites Rückschlagventil 71.2 angeordnet sind, um beim Stillstand des Verbrennungsmotors 1 und beim Betrieb des Elektromotors 2 mit dem ersten Rückschlagventil 71.1 die hydraulische Verbindung zur ersten Hydraulikpumpe 6.1 zu unterbrechen sowie um beim Betrieb des Verbrennungsmotors 1 und beim Stillstand des Elektromotors 2 mit dem zweiten Rückschlagventil 71.2 die hydraulische Verbindung zur zweiten Hydraulikpumpe 6.2 zu unterbrechen. Das erste Rückschlagventil 71.1 und das zweite Rückschlagventil 71.2 weisen insbesondere eine Kugel auf, welche im Ventil derart geführt ist, dass der Durchfluss der Hydraulikflüssigkeit in die eine Richtung vollständig blockiert wird, währen der Durchfluss in die andere Richtung freigegeben ist. In Figur 4 ist beispielhaft der Fall schematisch dargestellt, bei welchem der Elektromotor 2 in Betrieb ist und somit die hydraulische Arbeitsmaschine durch die zweite Hydraulikpumpe 6.2, welche vom Elektromotor 2 angetrieben wird, mit Hydraulikflüssigkeit versorgt wird.

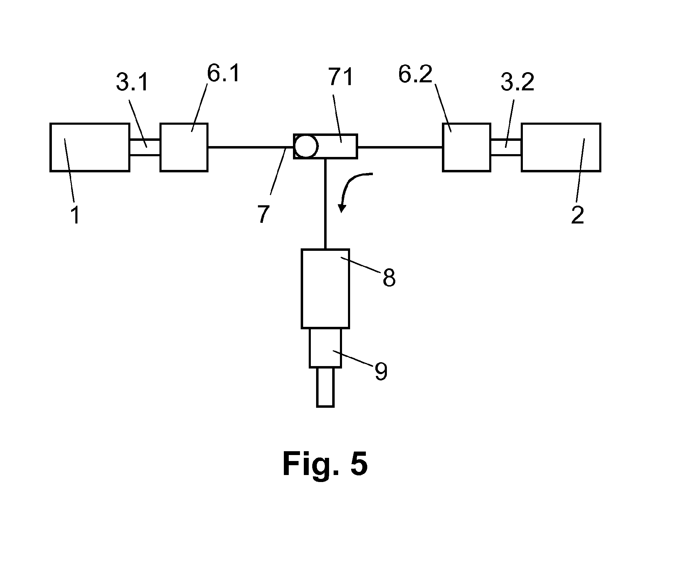

Figur 5 zeigt schematisch einen erfindungsgemässen Hybridantrieb, wobei im Hydraulikleitungssystem 7 ein einzelnes als T-Stück ausgeführtes Rückschlagventil 71 angeordnet ist. Das als T-Stück ausgeführte Rückschlagventil 71 ist mit der ersten Hydraulikpumpe 6.1, mit der zweiten Hydraulikpumpe 6.2 und dem hydraulischen Verbraucher 8 verbunden. Das als T-Stück ausgeführte Rückschlagventil 71 umfasst insbesondere eine Kugel, welche entweder den Durchgang von der ersten Hydraulikpumpe 6.1 zum hydraulischen Verbraucher 8 freigibt und den Durchgang zur zweiten Hydraulikpumpe 6.2 verschliesst, oder den Durchgang von der zweiten Hydraulikpumpe 6.2 zum hydraulischen Verbraucher 8 freigibt und den Durchgang zur ersten Hydraulikpumpe 6.1 verschliesst.

Die in Figur 4 und Figur 5 gezeigten erfindungsgemässen Hybridantriebe haben gegenüber dem im Stand der Technik bekannten Hybridantrieb gemäss Figur 2 den Vorteil, dass keine Umschaltung einer Kupplung erforderlich ist, um vom Betrieb des Hybridantriebs mit dem Verbrennungsmotor 1 auf den Betrieb des Hybridantriebs mit dem Elektromotor 1 umzuschalten. Durch die Rückschlagventile 71.1, 71.2, 71 erfolgt die Umschaltung vollkommen automatisch und der Benutzer muss keine Kupplung umschalten oder betätigen.

Statt eines einzelnen hydraulischen Verbrauchers 8 kann ein erfindungsgemässer Hybridantrieb gemäss Figur 3, Figur 4 oder Figur 5 eine Vielzahl hydraulische Verbraucher betreiben, wobei das Hydraulikleitungssystem 7 entsprechend ausgeführt ist und insbesondere mehrere Hydraulikventile, mehrere Hydraulikleitungen, Steuerungs- und Regeleinrichtungen, etc. aufweist.

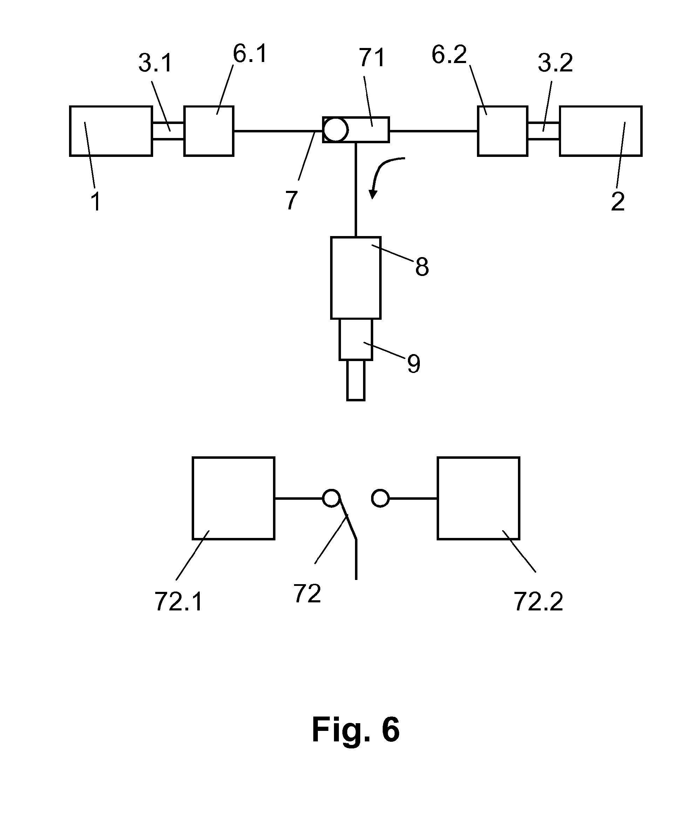

In Figur 6 ist schematisch ein erfindungsgemässer Hybridantrieb dargestellt, welcher zusätzlich einen Schalter 72 aufweist. Der Schalter 72 ist beispielsweise als elektrischer Schalter ausgeführt und eingerichtet, um zwischen Verbrennungsbetriebsfunktionen 72.1 für den Betrieb des Verbrennungsmotors 1 und Elektrobetriebsfunktionen 72.2 für den Betrieb des Elektromotors 2 umzuschalten.

Die Verbrennungsbetriebsfunktionen 72.1 betreffen das Einschalten, das Konfigurieren und/oder das Abschalten von Einrichtungen, um die Baumaschine mit dem Verbrennungsmotor 1 zu betreiben. Die Elektrobetriebsfunktionen 72.2 betreffen das Einschalten, das Konfigurieren und/oder das Abschalten von Einrichtungen, um die Baumaschine mit dem Elektromotor zu betreiben.

Die Verbrennungsbetriebsfunktionen 72.1 umfassen beispielsweise das Konfigurieren eines Zündschloss, so dass durch die Betätigung des Zündschlosses der Verbrennungsmotor 1 gestartet wird. Dementsprechend umfassen die Elektrobetriebsfunktionen 72.2 das Konfigurieren des Zündschlosses, so dass durch die Betätigung des Zündschlosses der Elektromotor 2 gestartet wird.

Die Verbrennungsbetriebsfunktionen 72.1 und die Elektrobetriebsfunktionen 72.2 umfassen beispielsweise jeweils das Einschalten und/oder Konfigurieren einer Steuerungseinrichtung für die Steuerung der Funktionen der Baumaschine, das Einschalten und/oder Konfigurieren eines Betriebsstundenzählers, das Einschalten und/oder Konfigurieren einer Beleuchtung.

Die Verbrennungsbetriebsfunktionen 72.1 umfassen beispielsweise das Einschalten von Standardfunktionen für den Verbrennungsmotor wie z.B. die Freischaltung eines Anlassers, das Einschalten eines Abstellmagnets (bei einem Dieselmotor), das Einschalten einer Kraftstoffpumpe und/oder das Abschalten eines Zusatzlüfters für die Kühlung der Hydraulikflüssigkeit.

Die Elektrobetriebsfunktionen 72.2 umfassen beispielsweise das Abschalten von Standardfunktionen für den Verbrennungsmotor wie z.B. die Sperrung eines Anlassers, das Abschalten eines Abstellmagnets (bei einem Dieselmotor), das Abschalten einer Kraftstoffpumpe und/oder das Einschalten eines Zusatzlüfters für die Kühlung der Hydraulikflüssigkeit.

Mit dem in Figur 6 schematisch dargestellten Schalter 72 wird somit die Baumaschine rasch und zuverlässig für den Betrieb mit dem Verbrennungsmotor 1 oder den Betrieb mit dem Elektromotor 2 eingerichtet. Der Schalter 72 ist insbesondere in einem Bereich angeordnet, welcher vom Baumaschinenführer leicht zugänglich ist, also beispielsweise auf einem Armaturenbrett der Baumaschine.

Zur Bereitstellung der Verbrennungsbetriebsfunktionen 72.1 und/oder der Elektrobetriebsfunktionen 72.2 sind elektrische und/oder elektronische Komponenten wie z.B. Relais, Leistungsschalter, Steuerungslogik, etc. vorgesehen.

### BEZUGSZEICHEN

| | | | |
|---|---|---|---|
| 1 | Verbrennungsmotor | 11 | Treibstofftank |
| 2 | Elektromotor | 21 | elektrisches Speisekabel |
| 3.1 | Verbrennungsmotorwelle | 3.2 | Elektromotorwelle |
| 4 | Kupplung | 5 | Kupplungswelle |
| 6 | Hydraulikpumpe | | |
| 6.1 | erste Hydraulikpumpe | 6.2 | zweite Hydraulikpumpe |
| 7 | Hydraulikleitungssystem | | |
| 71 | Rückschlagventil | | |
| 71.1 | erstes Rückschlagventil | 71.2 | zweites Rückschlagventil |
| 72 | Schalter | | |
| 72.1 | Verbrennungsbetriebsfunktionen | 72.2 | Elektrobetriebsfunktionen |
| 8 | hydraulische Arbeitsmaschine | | |
| 9 | mechanische Einrichtungen der hydraulischen Arbeitsmaschine | | |
| 100 | Bagger | 101 | Fahrwerk |
| 102 | Planierschild | 103 | Drehwerk |
| 104 | Oberwagen | 105 | Greifer |
| 106 | Steuerknüppel | 107 | Sitz |

## Patentansprüche

1. Baumaschine mit einem Hybridantrieb, welcher einen Verbrennungsmotor (1) und einen Elektromotor (2) umfasst, wobei:
eine erste Hydraulikpumpe (6.1) vorgesehen ist, welche vom Verbrennungsmotor (1) antreibbar ist,
eine zweite Hydraulikpumpe (6.2) vorgesehen ist, welche vom Elektromotor (2) antreibbar ist, und
ein Hydraulikleitungssystem (7) angeordnet ist, an welchem die erste Hydraulikpumpe (6.1), die zweite Hydraulikpumpe (6.2) und eine oder mehrere hydraulische Arbeitsmaschinen (8) der Baumaschine angeschlossen sind, **dadurch gekennzeichnet, dass**
das Hydraulikleitungssystem (7) ein hydraulisches Rückschlagventil (71) aufweist, welches eingerichtet ist, beim Antreiben der ersten Hydraulikpumpe (6.1) durch den Verbrennungsmotor (1) eine hydraulische Verbindung zwischen dem Hydraulikleitungssystem (7) und der zweiten Hydraulikpumpe (6.1) zu unterbrechen und beim Antreiben der zweiten Hydraulikpumpe (6.2) durch den Elektromotor eine hydraulische Verbindung zwischen dem Hydraulikleitungssystem (7) und der ersten Hydraulikpumpe (6.1) zu unterbrechen.

2. Baumaschine nach Anspruch 1, weiter umfassend einen Schalter (72), welcher eingerichtet ist, zwischen Verbrennungsbetriebsfunktionen (72.1) beim Betrieb des Verbrennungsmotors (1) und Elektrobetriebsfunktionen (72.2) beim Betrieb des Elektromotors (2) umzuschalten.

3. Baumaschine nach Anspruch 2, **dadurch gekennzeichnet, dass** sowohl die Verbrennungsbetriebsfunktionen (72.1) als auch die Elektrobetriebsfunktionen (72.2) eine oder mehrere der folgenden Funktionen umfassen: Betrieb einer Bordelektrik der Baumaschine, Betrieb eines Stundenzählers der Baumaschine, und Betrieb einer Beleuchtung der Baumaschine.

4. Baumaschine nach Anspruch 2 oder 3, **dadurch gekennzeichnet, dass** die Verbrennungsbetriebsfunktionen (72.1) eine oder mehrere der folgenden Funktionen umfassen: Einschalten von Standardfunktionen für den Verbrennungsmotor (1), Einschalten eines Abstellmagnets des Verbrennungsmotors (1), Einschalten einer Kraftstoffpumpe für den Verbrennungsmotor (1), Abschalten von Standardfunktionen für den Elektromotor (2) und Abschalten eines zusätzlichen Lüfters für das Hydrauliköl.

5. Baumaschine nach einem der Ansprüche 2 bis 4, **dadurch gekennzeichnet, dass** die Elektrobetriebsfunktionen (72.2) eine oder mehrere der folgenden Funktionen umfassen: Einschalten von Standardfunktionen für den Elektromotor (1), Einschalten eines zusätzlichen Lüfters für das Hydrauliköl, Abschalten von Standardfunktionen für den Verbrennungsmotor (1), Abschalten eines Abstellmagnets des Verbrennungsmotors (1), und Abschalten einer Kraftstoffpumpe für den Verbrennungsmotor (1).

6. Baumaschine nach einem der Ansprüche 2 bis 5, **dadurch gekennzeichnet, dass** einer oder mehrere der hydraulischen Antriebe (8) eine oder mehrere der folgenden Funktionen umfassen: Bewegen eines Greifers (105) der Baumaschine, Betreiben eines Hammers der Baumaschine, Antreiben eines Fahrwerks (101) der Baumaschine, Einstellen einer Teleskopfunktion eines Fahrwerks (101) der Baumaschine, Betätigen eines Planierschilds (102) der Baumaschine, Drehen eines Drehwerks (103) für einen drehbaren Oberwagen (104) der Baumaschine und Einstellen einer Neigung eines neigbaren Oberwagens (104) der Baumaschine.

7. Baumaschine nach einem der Ansprüche 2 bis 6, **dadurch gekennzeichnet, dass** der Elektromotor (2) und/oder die zweiten Hydraulikpumpe (6.2) an einem drehbaren Oberwagen (104) der Baumaschine angeordnet sind.

8. Baumaschine nach einem der Ansprüche 2 bis 6, **dadurch gekennzeichnet, dass** der Elektromotor (2) und/oder die zweite Hydraulikpumpe (6.2) an einem Fahrwerk (101) der Baumaschine angeordnet sind.

9. Umbau-Kit zum Umbau einer Baumaschine mit einem Verbrennungsmotor (1) und einer ersten Hydraulikpumpe (6.1) oder einem Elektromotor (2) und einer zweiten Hydraulikpumpe (6.2) in eine Baumaschine mit einem Hybridantrieb, umfassend:
einen Elektromotor (2) und eine zweite Hydraulikpumpe (6.2) oder einen Verbrennungsmotor (1) und eine erste Hydraulikpumpe (6.1), welche in der Baumaschine derart eingebaut werden können, dass die zweite Hydraulikpumpe (6.2) vom Elektromotor (2) antreibbar ist oder dass die erste Hydraulikpumpe (6.1) vom Verbrennungsmotor (1) antreibbar ist, und
Bauteile für ein Hydraulikleitungssystem (7) welche derart in die Baumaschine eingebaut werden können, dass ein Hydraulikleitungssystem (7) gebildet wird, an welchem die erste Hydraulikpumpe (6.1), die zweite Hydraulikpumpe (6.2) und eine oder mehrere hydraulische Arbeitsmaschinen (8) der Baumaschine angeschlossen sind, **dadurch gekennzeichnet, dass**
ein hydraulisches Rückschlagventil (71) enthalten ist, welches derart in die Baumaschine eingebaut werden kann, dass beim Antreiben der ersten Hydraulikpumpe (6.1) durch den Verbrennungsmotor (1) eine hydraulische Verbindung zwischen dem Hydraulikleitungssystem (7) und der zweiten Hydraulikpumpe (6.1) unterbrochen wird oder beim Antreiben der zweiten Hydraulikpumpe (6.2) durch den Elektromotor eine hydraulische Verbindung zwischen dem Hydraulikleitungssystem (7) und der ersten Hydraulikpumpe (6.1) unterbrochen wird.

10. Umbau-Kit nach Anspruch 9, weiter umfassend einen Schalter (72) sowie Einrichtungen, um Verbrennungsbetriebsfunktionen (72.1) beim Betrieb des Verbrennungsmotors (1) und Elektrobetriebsfunktionen (72.2) beim Betrieb des Elektromotors (2) zur Verfügung zu stellen, welcher Schalter (72) sowie welche Einrichtungen derart in die Baumaschine eingebaut werden können, dass mit dem Schalter (72) zwischen Verbrennungsbetriebsfunktionen (72.1) beim Betrieb des Verbrennungsmotors (1) und Elektrobetriebsfunktionen (72.2) beim Betrieb des Elektromotors (2) umgeschaltet werden kann.

11. Umbau-Kit nach Anspruch 9 oder 10, **dadurch gekennzeichnet, dass** die Einrichtungen, um Verbrennungsbetriebsfunktionen (72.1) beim Betrieb des Verbrennungsmotors (1) zur Verfügung zu stellen, eine oder mehrere der folgenden Funktionen zur Verfügung stellen: Betrieb einer Bordelektrik der Baumaschine, Betrieb eines Stundenzählers der Baumaschine, Betrieb einer Beleuchtung der Baumaschine, Einschalten von Standardfunktionen für den Verbrennungsmotor (1), Einschalten eines Abstellmagnets des Verbrennungsmotors (1), Einschalten einer Kraftstoffpumpe für den Verbrennungsmotor (1), Abschalten von Standardfunktionen für den Elektromotor (2) und Abschalten eines zusätzlichen Lüfters für das Hydrauliköl.

12. Umbau-Kit nach einem der Ansprüche 9 bis 11, **dadurch gekennzeichnet, dass** die Einrichtungen, um Elektrobetriebsfunktionen (72.2) beim Betrieb des Elektromotors (2) zur Verfügung zu stellen, eine oder mehrere der folgenden Funktionen zur Verfügung stellen: Betrieb einer Bordelektrik der Baumaschine, Betrieb eines Stundenzählers der Baumaschine, Betrieb einer Beleuchtung der Baumaschine, Einschalten von Standardfunktionen für den Elektromotor (1), Einschalten eines zusätzlichen Lüfters für das Hydrauliköl, Abschalten von Standardfunktionen für den Verbrennungsmotor (1), Abschalten eines Abstellmagnets des Verbrennungsmotors (1), und Abschalten einer Kraftstoffpumpe für den Verbrennungsmotor (1).

## Claims

1. Construction machine with a hybrid drive which comprises an internal combustion engine (1) and an electric motor (2), wherein:
a first hydraulic pump (6.1) is provided which can be driven by the internal combustion engine (1), a second hydraulic pump (6.2) is provided which can be driven by the electric motor (2), and
there is arranged a hydraulic line system (7) to which the first hydraulic pump (6.1), the second hydraulic pump (6.2) and one or more hydraulic working machines (8) of the construction machine are connected, **characterized in that** the hydraulic line system (7) has a hydraulic nonreturn valve (71) which is configured to interrupt a hydraulic connection between the hydraulic line system (7) and the second hydraulic pump (6.1) when the first hydraulic pump (6.1) is driven by the internal combustion engine (1) and to interrupt a hydraulic connection between the hydraulic line system (7) and the first hydraulic pump (6.1) when the second hydraulic pump (6.2) is driven by the electric motor.

2. Construction machine according to Claim 1, further comprising a switch (72) which is configured to switch over between internal combustion operating functions (72.1) during the operation of the internal combustion engine (1) and electric operating functions (72.2) during the operation of the electric motor (2).

3. Construction machine according to Claim 2, **characterized in that** both the internal combustion operating functions (72.1) and the electric operating functions (72.2) comprise one or more of the following functions: operation of on-board electrics of the construction machine, operation of an hour counter of the construction machine, and operation of a lighting system of the construction machine.

4. Construction machine according to Claim 2 or 3, **characterized in that** the internal combustion operating functions (72.1) comprise one or more of the following functions: switching on standard functions for the internal combustion engine (1), switching on a cutoff solenoid of the internal combustion engine (1), switching on a fuel pump for the internal combustion engine (1), switching off standard functions for the electric motor (2) and switching off an additional fan for the hydraulic oil.

5. Construction machine according to one of Claims 2 to 4, **characterized in that** the electric operating functions (72.2) comprise one or more of the following functions: switching on standard functions for the electric motor (1), switching on an additional fan for the hydraulic oil, switching off standard functions for the internal combustion engine (1), switching off a cutoff solenoid of the internal combustion engine (1), and switching off a fuel pump for the internal combustion engine (1).

6. Construction machine according to one of Claims 2 to 5, **characterized in that** one or more of the hydraulic drives (8) comprise one or more of the following functions: moving a gripper (105) of the construction machine, operating a hammer of the construction machine, driving a running gear unit (101) of the construction machine, setting a telescopic function of a running gear unit (101) of the construction machine, actuating a dozer blade (102) of the construction machine, rotating a rotary unit (103) for a rotatable superstructure (104) of the construction machine and setting an inclination of an inclinable superstructure (104) of the construction machine.

7. Construction machine according to one of Claims 2 to 6, **characterized in that** the electric motor (2) and/or the second hydraulic pump (6.2) are/is arranged on a rotatable superstructure (104) of the construction machine.

8. Construction machine according to one of Claims 2 to 6, **characterized in that** the electric motor (2) and/or the second hydraulic pump (6.2) are/is arranged on a running gear unit (101) of the construction machine.

9. Conversion kit for converting a construction machine with an internal combustion engine (1) and a first hydraulic pump (6.1) or an electric motor (2) and a second hydraulic pump (6.2) into a construction machine with a hybrid drive, comprising:
an electric motor (2) and a second hydraulic pump (6.2) or an internal combustion engine (1) and a first hydraulic pump (6.1) which can be installed in the construction machine in such a way that the second hydraulic pump (6.2) can be driven by the electric motor (2) or that the first hydraulic pump (6.1) can be driven by the internal combustion engine (1), and
components for a hydraulic line system (7) which can be installed in the construction machine in such a way that there is formed a hydraulic line system (7) to which the first hydraulic pump (6.1), the second hydraulic pump (6.2) and one or more hydraulic working machines (8) of the construction machine are connected, **characterized in that**
a hydraulic nonreturn valve (71) is present which can be installed in the construction machine in such a way that a hydraulic connection between the hydraulic line system (7) and the second hydraulic pump (6.1) is interrupted when the first hydraulic pump (6.1) is driven by the internal combustion engine (1) or a hydraulic connection between the hydraulic line system (7) and the first hydraulic pump (6.1) is interrupted when the second hydraulic pump (6.2) is driven by the electric motor.

10. Conversion kit according to Claim 9, further comprising a switch (72) and equipment in order to make available internal combustion operating functions (72.1) during the operation of the internal combustion engine (1) and electric operating functions (72.2) during the operation of the electric motor (2), which switch (72) and which equipment can be installed in the construction machine in such a way that the switch (72) can be used to switch over between internal combustion operating functions (72.1) during the operation of the internal combustion engine (1) and electric operating functions (72.2) during the operation of the electric motor (2).

11. Conversion kit according to Claim 9 or 10, **characterized in that** the equipment in order to make available internal combustion operating functions (72.1) during the operation of the internal combustion engine (1) make available one or more of the following functions: operation of on-board electrics of the construction machine, operation of an hour counter of the construction machine, operation of a lighting system of the construction machine, switching on standard functions for the internal combustion engine (1), switching on a cutoff solenoid of the internal combustion engine (1), switching on a fuel pump for the internal combustion engine (1), switching off standard functions for the electric motor (2) and switching off an additional fan for the hydraulic oil.

12. Conversion kit according to one of Claims 9 to 11, **characterized in that** the equipment in order to make available electric operating functions (72.2) during the operation of the electric motor (2) make available one or more of the following functions: operation of on-board electrics of the construction machine, operation of an hour counter of the construction machine, operation of a lighting system of the construction machine, switching on standard functions for the electric motor (1), switching on an additional fan for the hydraulic oil, switching off standard functions for the internal combustion engine (1), switching off a cutoff solenoid of the internal combustion engine (1), and switching off a fuel pump for the internal combustion engine (1).

## Revendications

1. Engin de construction avec un entraînement hybride, qui comprend un moteur à combustion interne (1) et un moteur électrique (2), dans lequel :
une première pompe hydraulique (6.1) est prévue, qui peut être entraînée par le moteur à combustion interne (1),
une deuxième pompe hydraulique (6.2) est prévue, qui peut être entraînée par le moteur électrique (2) et
un système de conduites hydrauliques (7) est formé, auquel la première pompe hydraulique (6.1), la deuxième pompe hydraulique (6.2) et une ou plusieurs machines de travail hydrauliques (8) de l'engin de construction sont raccordées, **caractérisé en ce que**
le système de conduites hydrauliques (7) présente un clapet anti retour hydraulique (71), qui est conçu afin d'interrompre lors de l'entraînement de la première pompe hydraulique (6.1) par le moteur à combustion interne (1) une liaison hydraulique entre le système de conduites hydrauliques (7) et la deuxième pompe hydraulique (6.1) et afin d'interrompre lors de l'entraînement de la deuxième pompe hydraulique (6.2) par le moteur électrique une liaison hydraulique entre le système de conduites hydrauliques (7) et la première pompe hydraulique (6.1).

2. Engin de construction selon la revendication 1, comprenant en outre un interrupteur (72), qui est conçu afin de permuter entre des fonctions de fonctionnement avec combustion (72.1) lors du fonctionnement du moteur à combustion interne (1) et des fonctions de fonctionnement électrique (72.2) lors du fonctionnement du moteur électrique (2).

3. Engin de construction selon la revendication 2, **caractérisé en ce que** tant les fonctions de fonctionnement avec combustion (72.1) que les fonctions de fonctionnement électrique (72.2) comprennent une ou plusieurs des fonctions suivantes : fonctionnement d'un réseau électrique de bord de l'engin de construction, fonctionnement d'un compteur d'heures de l'engin de construction et fonctionnement d'un éclairage de l'engin de construction.

4. Engin de construction selon la revendication 2 ou 3, **caractérisé en ce que** les fonctions de fonctionnement avec combustion (72.1) comprennent une ou plusieurs des fonctions suivantes : mise en service des fonctions standard pour le moteur à combustion interne (1), mise en service d'un aimant d'arrêt du moteur à combustion interne (1), mise en service d'une pompe à carburant pour le moteur à combustion interne (1), mise hors service des fonctions standard pour le moteur électrique (2) et mise hors service d'un ventilateur supplémentaire pour l'huile hydraulique.

5. Engin de construction selon une des revendications 2 à 4, **caractérisé en ce que** les fonctions de fonctionnement électrique (72.2) comprennent une ou plusieurs des fonctions suivantes : mise en service des fonctions standard pour le moteur électrique (1), mise en service d'un ventilateur supplémentaire pour l'huile hydraulique, mise hors service des fonctions standard pour le moteur à combustion interne (1), mise hors service d'un aimant d'arrêt du moteur à combustion interne (1) et mise hors service d'une pompe à carburant pour le moteur à combustion interne (1).

6. Engin de construction selon une des revendications 2 à 5, **caractérisé en ce qu'**un ou plusieurs des entraînements hydrauliques (8) comprennent une ou plusieurs des fonctions suivantes : déplacement d'un organe de prévention (105) de l'engin de construction, utilisation d'un marteau de l'engin de construction, entraînement d'un train de roulement (101) de l'engin de construction, réglage d'une fonction télescopique d'un train de roulement (101) de l'engin de construction, actionnement d'une lame niveleuse (102) de l'engin de construction, rotation d'un mécanisme de rotation (103) pour une tourelle rotative (104) de l'engin de construction et réglage d'une inclinaison d'une tourelle inclinable (104) de l'engin de construction.

7. Engin de construction selon une des revendications 2 à 6, **caractérisé en ce que** le moteur électrique (2) et/ou la deuxième pompe hydraulique (6.2) sont disposés sur une tourelle rotative (104) de l'engin de construction.

8. Engin de construction selon une des revendications 2 à 6, **caractérisé en ce que** le moteur électrique (2) et/ou la deuxième pompe hydraulique (6.2) sont disposés sur un train de roulement (101) de l'engin de construction.

9. Kit de transformation pour la transformation d'un engin de construction comportant un moteur à combustion interne (1) et une première pompe hydraulique (6.1) ou un moteur électrique (2) et une deuxième pompe hydraulique (6.2) en un engin de construction avec un entraînement hybride, comprenant :
un moteur électrique (2) et une deuxième pompe hydraulique (6.2) ou un moteur à combustion interne (1) et une première pompe hydraulique (6.1), qui peuvent être intégrés dans l'engin de construction de telle sorte que la deuxième pompe hydraulique (6.2) puisse être entraînée par le moteur électrique (2) ou que la première pompe hydraulique (6.1) puisse être entraînée par le moteur à combustion interne (1), et
des composants pour un système de conduites hydrauliques (7) qui peuvent être intégrés dans l'engin de construction de telle sorte qu'un système de conduites hydrauliques (7) soit formé, auquel la première pompe hydraulique (6.1), la deuxième pompe hydraulique (6.2) et une ou plusieurs machines de travail hydrauliques (8) de l'engin de construction sont raccordées, **caractérisé en ce que**
un clapet anti retour hydraulique (71) est contenu, qui peut être intégré dans l'engin de construction de telle sorte que lors de l'entraînement de la première pompe hydraulique (6.1) par le moteur à combustion interne (1) une liaison hydraulique entre le système de conduites hydrauliques (7) et la deuxième pompe hydraulique (6.1) est interrompue et lors de l'entraînement de la deuxième pompe hydraulique (6.2) par le moteur électrique une liaison hydraulique entre le système de conduites hydrauliques (7) et la première pompe hydraulique (6.1) est interrompue.

10. Kit de transformation selon la revendication 9, comprenant en outre un interrupteur (72) ainsi que des dispositifs, pour mettre à disposition des fonctions de fonctionnement avec combustion (72.1) lors du fonctionnement du moteur à combustion interne (1) et des fonctions de fonctionnement électrique (72.2) lors du fonctionnement du moteur électrique (2), lequel interrupteur (72) ainsi que les dispositifs peuvent être intégrés dans l'engin de construction de telle sorte qu'avec l'interrupteur (72) on puisse permuter entre des fonctions de fonctionnement avec combustion (72.1) lors du fonctionnement du moteur à combustion interne (1) et des fonctions de fonctionnement électrique (72.2) lors du fonctionnement du moteur électrique (2).

11. Kit de transformation selon la revendication 9 ou 10, **caractérisé en ce que** les dispositifs, pour mettre à disposition des fonctions de fonctionnement avec combustion (72.1) lors du fonctionnement du moteur à combustion interne (1), mettent à disposition une ou plusieurs des fonctions suivantes : fonctionnement d'un réseau électrique de bord de l'engin de construction, fonctionnement d'un compteur d'heures de l'engin de construction, fonctionnement d'un éclairage de l'engin de construction, mise en service des fonctions standard pour le moteur à combustion interne (1), mise en service d'un aimant d'arrêt du moteur à combustion interne (1), mise en service d'une pompe à carburant pour le moteur à combustion interne (1), mise hors service des fonctions standard pour le moteur électrique (2) et mise hors service d'un ventilateur supplémentaire pour l'huile hydraulique.

12. Kit de transformation selon une des revendications 9 à 11, **caractérisé en ce que** les dispositifs, pour mettre à disposition des fonctions de fonctionnement électrique (72.2) lors du fonctionnement du moteur électrique (2), mettent à disposition une ou plusieurs des fonctions suivantes : fonctionnement d'un réseau électrique de bord de l'engin de construction, fonctionnement d'un compteur d'heures de l'engin de construction, fonctionnement d'un éclairage de l'engin de construction, mise en service des fonctions standard pour le moteur électrique (1), mise en service d'un ventilateur supplémentaire pour l'huile hydraulique, mise hors service des fonctions standard pour le moteur à combustion interne (1), mise hors service d'un aimant d'arrêt du moteur à combustion interne (1) et mise hors service d'une pompe à carburant pour le moteur à combustion interne (1).
